# EUROPEAN PATENT SPECIFICATION

(11) **EP 4 063 764 B1**
(45) Date of publication and mention of the grant of the patent: **23.08.2023**
(21) Application number: 21184309.9
(22) Date of filing: 07.07.2021
(51) Int. Cl.: F25B 27/00, F25D 11/00

(54) **MULTIFUNCTIONAL VEHICLE-MOUNTED REFRIGERATOR WITH A PLUG-IN BATTERY**
MULTIFUNKTIONALER, FAHRZEUGMONTIERTER KÜHLSCHRANK MIT EINER EINSTECKBAREN BATTERIE
RÉFRIGÉRATEUR DOTÉ D'UNE BATTERIE ENFICHABLE MONTÉ SUR UN VÉHICULE MULTIFONCTION

(30) Priority: 24.03.2021 CN 202120599452 U
(43) Date of publication of application: 28.09.2022
(73) Proprietor: Foshan Alpicool Electric Appliance Co., Ltd., Foshan, Guangdong 528000 (CN)
(72) Inventor: HE, Shengming, Nanxiong City (CN); ZENG, Dongmei, Wuzhou City (CN); SHI, Jianglong, Baoji City (CN)
(74) Representative: Sach, Greg Robert

(56) References cited:
- WO-A2-2016/004379
- CN-A- 108 131 880
- US-A- 3 605 431
- US-A1- 2017 366 042
- US-A1- 2021 018 250

## Description

This invention relates to the field of vehicle-mounted refrigerators, and more particularly relates to a multifunctional vehicle-mounted refrigerator with a plug-in battery.

### BACKGROUND

With the improvement of people's living standards, more and more people will put a car refrigerator in their cars when they drive out to play. In order to make the car refrigerator keep working, the car refrigerator generally comes with its own power supply, but most of the current car refrigerator power supplies cannot be removed, and can only be charged onsite, which is inconvenient to use.

There are also removable car refrigerator batteries on the market, but they have a complicated structure. In particular, they use many springs that are prone to jams, and the cost is relatively high.

Furthermore, many car refrigerators are now equipped with pull rods to facilitate the movement of the car refrigerators. These pull rods generally adopt the structure of inner and outer tubes. However, they are not provided with a locking and unlocking mechanism, so that the pull rod is likely to extend outside per se during use, and the extended pull rod is likely to be damaged by collision. Additionally, current car refrigerators have just a single function and are not able to meet the current needs of customers.

US 2017/366042 A1 discloses a battery operated refrigerator being the closest prior art to the invention. US 2021/018250 A1, WO 2016/004379 A, CN 108 131 880 A and US 3 605 431 A disclose other solutions of a portable refrigerator.

The present invention is disclosed in the independent claim 1. Further embodiments are disclosed in the dependent claims. This invention provides a multifunctional vehicle-mounted refrigerator with a plug-in battery, which has a reasonable structure and diverse functions, can realize the disassembly and assembly of the battery, and the adjustment of the pull rod is convenient and reasonable.

There is provided a vehicle-mounted refrigerator that includes a refrigerator box, an openable cover arranged on the top of the refrigerator box, a refrigerating compartment and a freezing compartment that are arranged side by side in the refrigerator box, and a compressor that installed at the bottom of one side of the refrigerator box.

The vehicle-mounted refrigerator further includes two rollers arranged at one end of the bottom of the refrigerator box and a telescopic pull rod arranged at the other end of the refrigerator box.

A battery chamber is provided in one side wall of the refrigerator box, and a battery is inserted into the battery chamber. The battery includes a battery box and a battery cover arranged at the upper end of the battery box. Laterally movable buckle plates are symmetrically arranged at both ends of the battery cover. The two ends of the buckle plates protrude from the respective ends of the battery cover. The central portion of the buckle plates is disposed outside the battery cover. The buckle plates at both ends are connected together by an elastic piece. The elastic piece is disposed in a limit groove defined in an inner side of the battery cover. A conductive socket is arranged in the battery chamber, and a conductive plug disposed on one side of the battery box is plugged into the conductive socket. The inner side wall of the cover is provided with at least one groove. A detachable fruit cutting board is embedded in the groove. One end of the groove is equipped with a rotating blocking plate, and the other end is provided with a convex plate on the side wall, and both ends of the fruit cutting board are restricted in the groove by the rotating blocking plate and the convex plate. The inner bottom surface of the groove is evenly distributed with raised blocks.

In one embodiment, a connecting groove is defined in an inner side of the buckle plates at a position corresponding to the elastic piece, and an elastic piece connecting portion is arranged at an end of the connecting groove.

In one embodiment, a switch button is installed on the battery cover, and a power indicator and a status indicator are arranged on one side of the switch button. The switch button, the power indicator and the status indicator are all coupled to a control circuit board arranged on an inner side of the battery cover.

In one embodiment, both sides of the refrigerator box are each installed with a pair of pull rod mounts, and a pull rod fixing tube is connected between the pull rod mounts on disposed on each side. An axially movable pull rod inner tube is installed inside the pull rod fixing tube. One end of the two pull rod inner tubes is connected by a pull rod. A movable shaft plug is axially inserted into and arranged at one end of each of the pull rod inner tubes connected with the pull rod. The outer end of the movable shaft plug is provided with an unlocking knob that is installed on a side wall of the pull rod. When the unlocking knob is rotated, the movable shaft plug is pushed to move axially. A fixing shaft plug is installed at the other end of the pull rod inner tube. A lock tongue is radially movably arranged inside the fixing shaft plug. One end of the lock tongue is equipped with a spring, and the other end is inserted into a lock hole defined in the side wall of the pull rod fixing tube. An unlocking push rod is arranged axially movable in the fixing shaft plug. One end of the unlocking push rod is provided with a slope and inserted into the middle of the lock tongue to push the lock tongue to move radially, and the other end of the unlocking push rod is connected with the movable shaft plug through a connecting shaft.

In one embodiment, the unlocking push rod is provided with an elongated limiting hole, and a protrusion inside the fixing shaft plug is embedded in the elongated limiting hole.

In one embodiment, a corner protection board is installed at the bottom of one end of the refrigerator box that is not equipped with rollers, and a corner protection boss is arranged transversely on the inner side of the corner protection board, and slopes are arranged on both sides of the corner protection boss.

In one embodiment, a rotating shaft is symmetrically arranged between the two ends at one side of the cover. In the center of the side of the cover facing away from the rotating shaft is installed a flip buckle cover, which is operative to be interlocked with the upper edge of the refrigerator box. The two ends of an inner side wall at the top of the refrigerator box are provided with vertical slots, and the bottom of each of the vertical slots is provided with a circular slot, and the rotating shaft is inserted and embedded into the circular slot along the vertical slot at either end.

In one embodiment, at least two types of power sockets are installed on one side of the refrigerator box below the battery chamber.

In one embodiment, a storage basket is installed inside the refrigerating chamber and/or freezing chamber.

Compared with the related art, the present invention provides the following benefits.

It can realize the installation and removal of the battery. The battery adopts the structure of an elastic piece which is limited in position, so that when the buckle plate moves and the elastic part is squeezed they will not run astray, thus preventing jamming. The vehicle-mounted refrigerator is provided with an unlocking structure, whereby the pull rod can be kept in a retracted state to prevent it from extending by itself thereby protecting the pull rod. The vehicle-mounted refrigerator is further equipped with a fruit cutting board, making it convenient to cut fruits or other food outdoors or in the car, eliminating the need to bring an additional fruit cutting board, which may otherwise affect the normal use of the car refrigerator, thereby providing convenience of use.

### BRIEF DESCRIPTION OF DRAWINGS

FIG. 1 is a perspective view of the structure of the present invention.
FIG. 2 is a perspective view of a partial structure of the present invention.
FIG. 3 is a front view of the structure of the present invention.
FIG. 4 is a front view of a half-sectional structure of the present invention.
FIG. 5 is a partial enlarged view of the structure at A shown in FIG. 2.
FIG. 6 is a partial enlarged view of the structure at C shown in FIG. 4.
FIG. 7 is a three-dimensional schematic diagram of a battery according to the present invention.
FIG. 8 is a schematic diagram illustrating a local part of the battery according to the present invention.
FIG. 9 is a half-sectional structural diagram of the pull rod according to the present invention.
FIG. 10 is a partial enlarged view of the structure at B shown in FIG. 9.
FIG. 11 is a perspective view of the structure of the cover according to the present invention.
FIG. 12 is a side sectional view of the cover according to the present invention.
FIG. 13 is a circuit diagram of the display panel of according to an example not being part of the present invention.
FIG. 14 is a schematic diagram of the solar management part of the charging management board according to an example not being part of the present invention.
FIG. 15 is a schematic diagram of the lithium battery management part of the charge management board according to an example not being part of the present invention.
FIG. 16 is a circuit diagram of the control board according to an example not being part of the present invention.

### DETAILED DESCRIPTION

All the embodiments of the present invention disclose all the technical features of the independent claim 1.

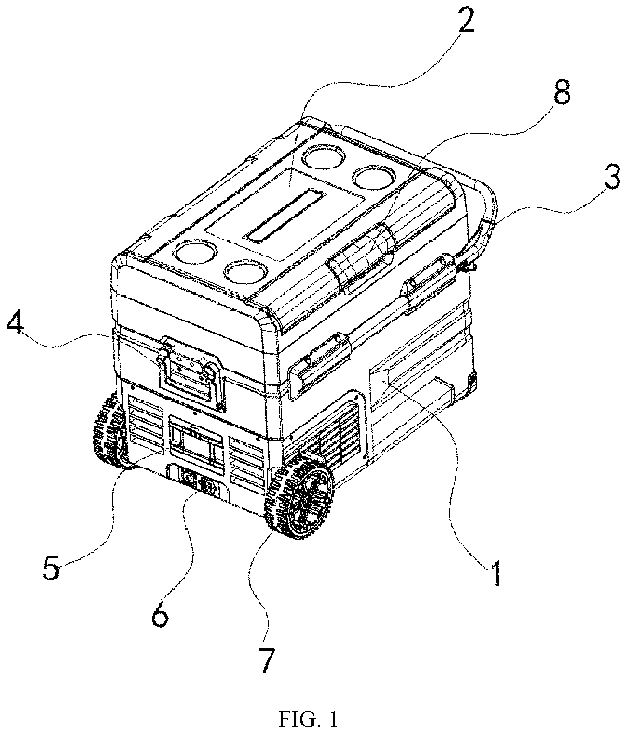

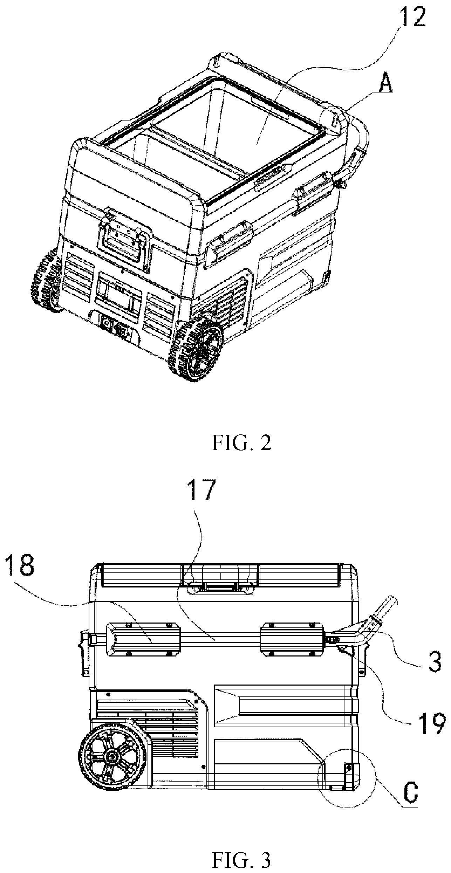

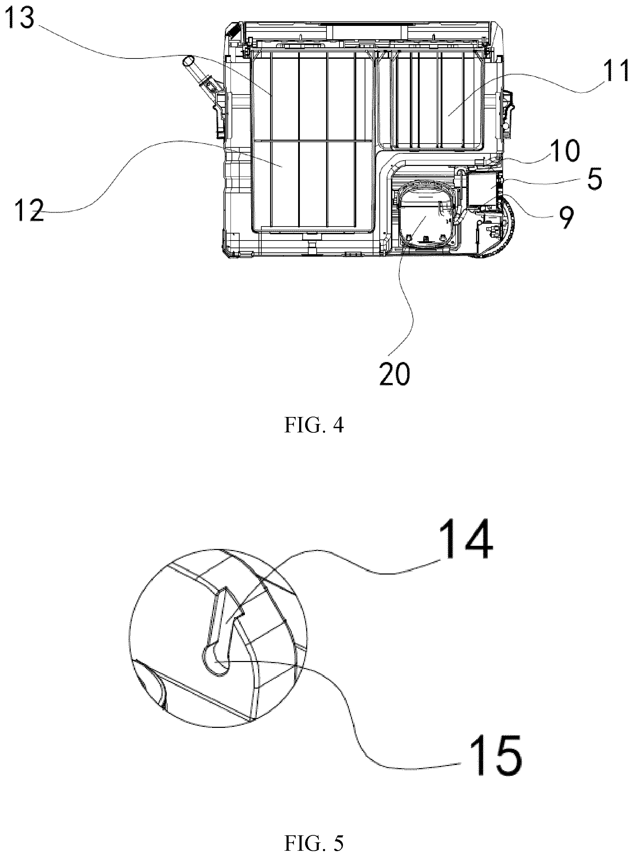

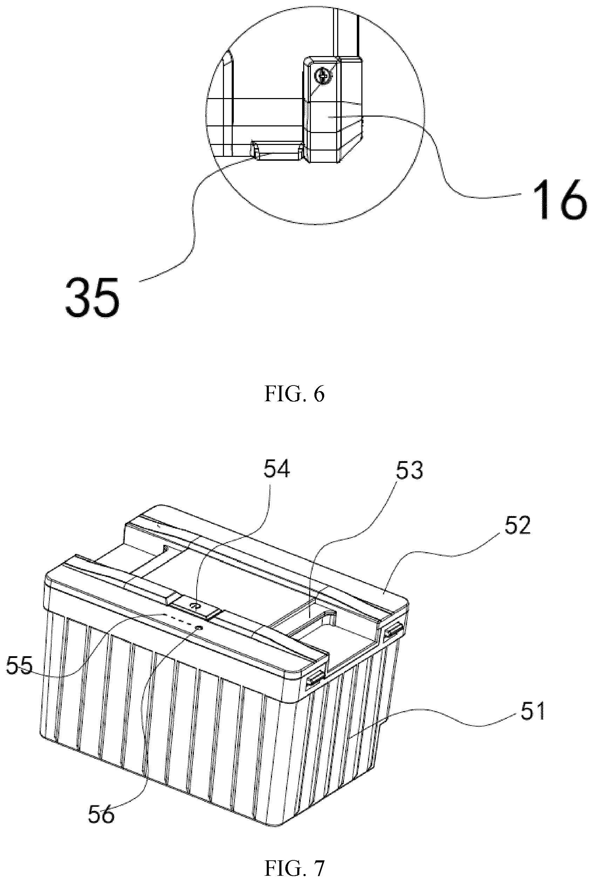

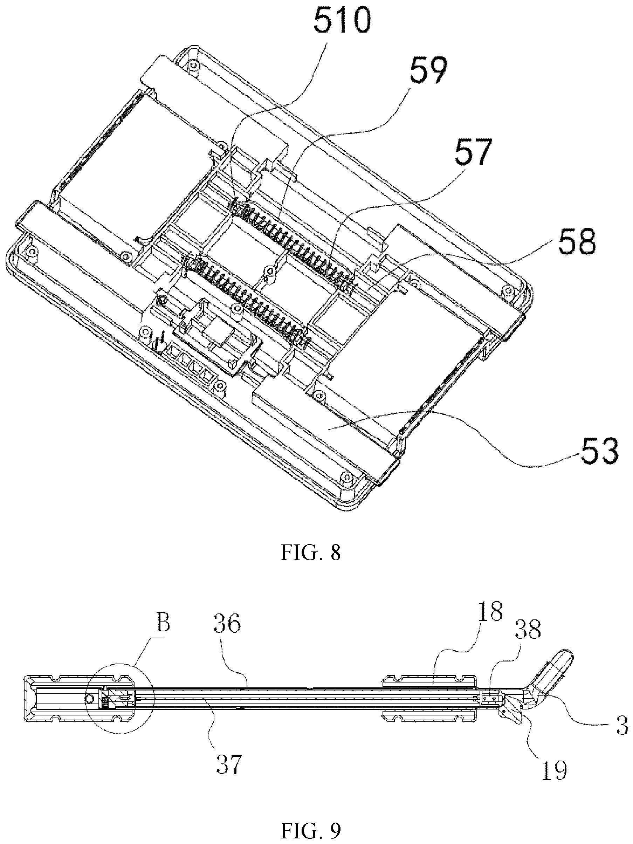

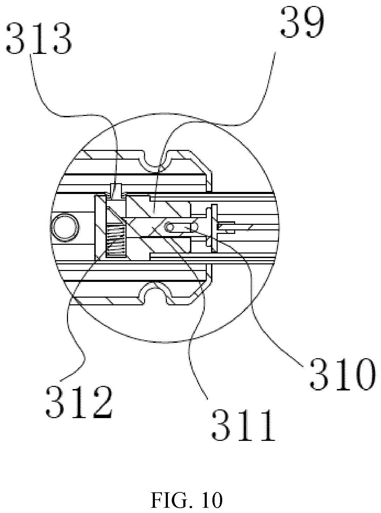

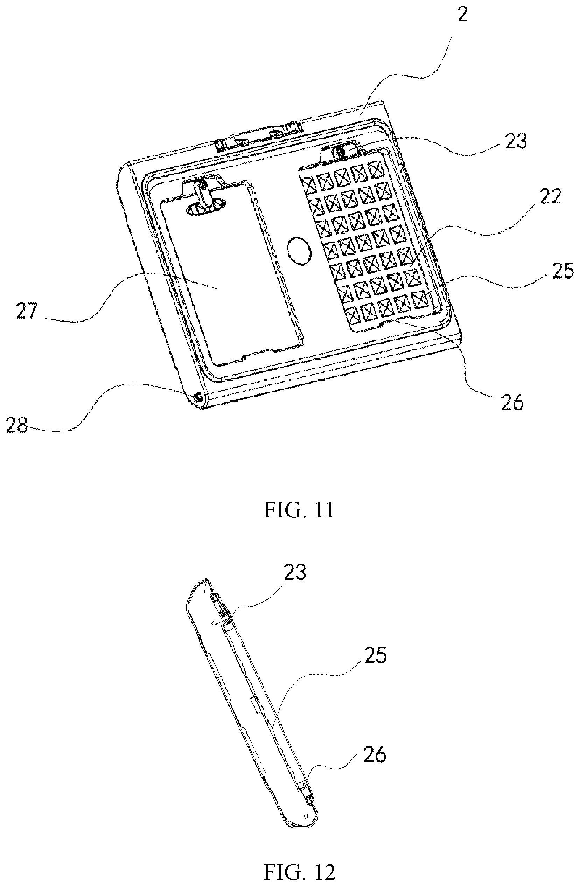

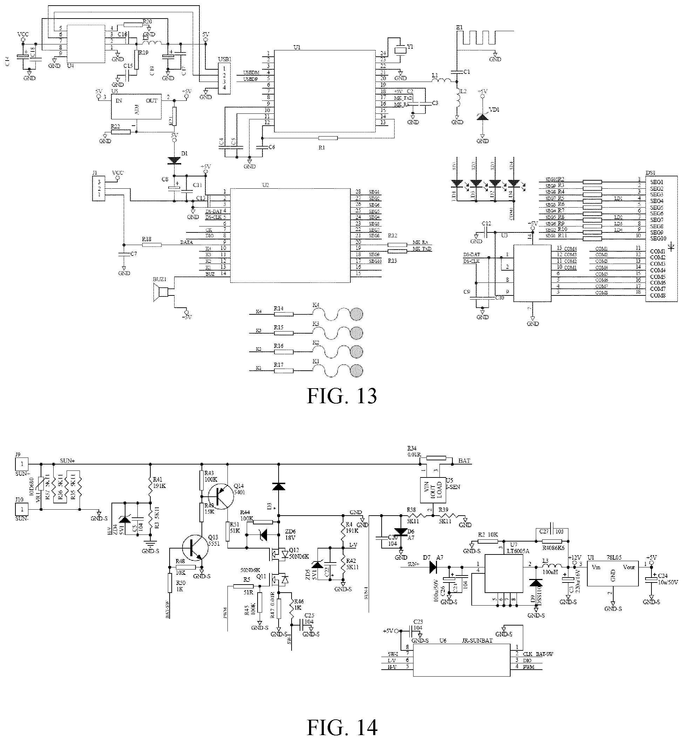

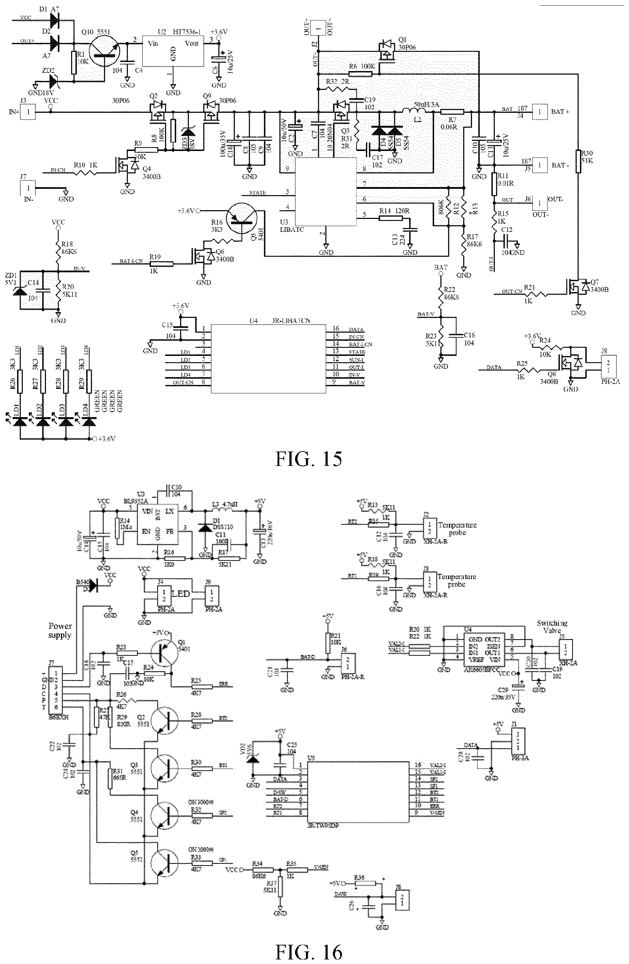

As illustrated in FIGS. 1 to 12, the present invention provides a multifunctional vehicle-mounted refrigerator with a plug-in battery, which includes a refrigerator box 1 and an openable cover 2 that is arranged on the top of the refrigerator box 1. The vehicle-mounted refrigerator further includes a refrigerating chamber 12 and a freezing chamber 11 that are arranged side by side in the refrigerator box 1, and a compressor 20 is installed at the bottom of one side of the refrigerator box 1. Figures 13-16 show examples, which are not part of the present invention.

The vehicle-mounted refrigerator further includes two rollers 7 arranged at one end of the bottom of the refrigerator box 1 and a telescopic pull rod 3 arranged at the other end of the refrigerator box 1.

A battery chamber 10 is provided in one side wall of the refrigerator box 1, and a battery 5 is inserted into the battery chamber 10. The battery 5 includes a battery box 51 and a battery cover 52 arranged at the upper end of the battery box 51. Laterally movable buckle plates 53 are symmetrically arranged at both ends of the battery cover 52. The two ends of the buckle plates 53 protrude from the respective ends of the battery cover 52. The central portion of the buckle plates 53 is disposed outside the battery cover 52. The buckle plates 53 at both ends are connected together by an elastic piece 57. The elastic piece 57 is disposed in a limit groove 59 defined in an inner side of the battery cover 52. A conductive socket 9 is arranged in the battery chamber 10, and a conductive plug disposed on one side of the battery box 51 is plugged into the conductive socket 9.

A display and a control board coupled to it are installed on the upper side of the refrigerator box 1 for controlling the operation of the entire refrigerator.

It is only needed to move the buckle plates 53 at both ends to make the protruding parts of the buckle plates 53 detach from the vehicle-mounted refrigerator, and the buckle plates 53 will automatically recover under the action of the elastic pieces 57 after being released.

The limit slot 59 limits the position of the elastic piece 57 to ensure that the buckle plates 3 at both ends are relatively stable when they are returned, and there will be no jamming.

The inner side of the buckle plate 53 is provided with a connecting groove 58 at a position corresponding to the elastic piece 57. The end of the connecting groove 58 is provided with an elastic piece connecting portion 510, and the elastic piece 57 is a spring. The elastic piece connecting portion 510 includes an insert plate and a spring insert pin arranged at the end of the insert plate, which can be mated with the insert plate through the spring, and the spring insert pin axially extends into the inside of the spring to fix the end of the spring, ensuring that the force is evenly applied when the spring is compressed.

In one embodiment, a switch button 54 is installed on the battery cover 52, and a power indicator 55 and a status indicator 56 are arranged on one side of the switch button 54. The switch button 54, the power indicator 55 and the status indicator 56 are all coupled to a control circuit board arranged on an inner side of the battery cover 52, thus facilitating the installation and removal of the battery to and from the car refrigerator, and the battery can be used for temporary use when used outdoors.

In one embodiment, both sides of the refrigerator box 1 are each installed with a pair of pull rod mounts 18, and a pull rod fixing tube 17 is connected between the pull rod mounts 18 on disposed on each side. An axially movable pull rod inner tube 36 is installed inside the pull rod fixing tube 17. One end of the two pull rod inner tubes 36 is connected by a pull rod 3. A movable shaft plug 38 is axially inserted into and arranged at one end of each of the pull rod inner tubes 36 connected with the pull rod 3. The outer end of the movable shaft plug 38 is provided with an unlocking knob 19 that is installed on a side wall of the pull rod 3. When the unlocking knob 19 is rotated, the movable shaft plug 38 is pushed to move axially. A fixing shaft plug 39 is installed at the other end of the pull rod inner tube 36. A lock tongue 313 is radially movably arranged inside the fixing shaft plug 39. One end of the lock tongue 313 is equipped with a spring 312, and the other end is inserted into a lock hole defined in the side wall of the pull rod fixing tube 17. An unlocking push rod 311 is arranged axially movable in the fixing shaft plug 39. One end of the unlocking push rod 311 is provided with a slope and inserted into the middle of the lock tongue 313 to push the lock tongue 313 to move radially, and the other end of the unlocking push rod 311 is connected with the movable shaft plug 38 through a connecting shaft 37.

When unlocking, turn the unlocking knob 19 to rotate, and push the movable shaft plug 38 to move axially, and the unlocking push rod 311 is driven to move axially through the connecting shaft 37, and the tongue 313 is pushed back, so that the pull rod 3 can be pulled to pull out the pull rod inner tube 36 thereby realizing the unlocking and stretching of the pull rod.

In addition, the unlocking push rod 311 may be provided with an elongated limiting hole 310, and a protrusion inside the fixing shaft plug 39 may be embedded in the elongated limiting hole 310 to limit the distance of travel of the unlocking push rod 311.

A notch is provided in a side wall of the pull rod 3, and the unlocking knob 19 is installed in the notch, and is connected to the side wall at one end of the notch through a rotating shaft.

According to the present invention, the inner side wall of the cover 2 is provided with at least one groove 22. A detachable fruit cutting board 27 is embedded in the groove 22. One end of the groove 22 is equipped with a rotating blocking plate 23, and the other end is provided with a convex plate 26 on the side wall, and both ends of the fruit cutting board 27 are restricted in the groove 22 by the rotating blocking plate 23 and the convex plate 26. The inner bottom surface of the groove 22 is evenly distributed with raised blocks 25.

When in use, the fruit cutting board 27 can be taken out of the groove 22, and fruits or other foods can be placed on the fruit cutting board 27 for cutting. The fruit cutting board 27 may be an ordinary household cutting board. The size of the groove 22 matches the fruit cutting board 27. There are usually two grooves 22, and one or two fruit cutting boards 27 can be installed as needed.

As a method of fixing the fruit cutting board 27, a rotating blocking plate 23 is installed at one end of the groove 22, and a convex plate 26 is arranged on the side wall of the other end. As such, the two ends of the fruit cutting board 27 are restricted in the groove 22 by the rotating blocking plate 23 and the convex plate 26, and the fruit cutting board 27 is installed and removed by way of turning the rotating blocking plate 23.

In order to facilitate the installation of the rotating blocking plate 23, one end of the groove 22 may be provided with a receding inner slot, and one end of the rotating blocking plate 23 is connected with a rotating shaft arranged in the middle of the receding inner slot.

The inner bottom surface of the groove 22 is uniformly distributed with raised blocks 25, the raised blocks 25 are in the shape of a square truncated cone, and the top of the raised blocks 25 is pointed, and is in point contact with the fruit cutting board 27, so as to keep the surface of the fruit cutting board 27 dry and reduce the growth of bacteria.

A corner protection board 16 may be installed at the bottom of one end of the refrigerator box 1 that is not equipped with rollers 7, and a corner protection boss 35 may be arranged transversely on the inner side of the corner protection board 16, and slopes are arranged on both sides of the corner protection boss 35. The corner protection boss 35 can protect the corner protection board 16 from being hit, thus effectively protecting the corner protection board 16.

As another embodiment, a rotating shaft 28 may be symmetrically arranged between the two ends at one side of the cover 2. In the center of the side of the cover 2 facing away from the rotating shaft 28 may be installed a flip buckle cover 8, which is operative to be interlocked with the upper edge of the refrigerator box 1. The two ends of an inner side wall at the top of the refrigerator box 1 may be provided with vertical slots 14, and the bottom of each of the vertical slots 14 is provided with a circular slot 15, and the rotating shaft 28 is inserted and embedded into the circular slot 15 along the vertical slot 14 at either end. The cover 2 can be installed such that it opens to the left or to the right, thus providing strong versatility.

At least two types of power sockets 6 may be installed on one side of the refrigerator box 1 under the battery chamber 10, and a charging management board may be installed inside, and the power input mode can be freely selected.

A storage basket 13 may be installed inside the refrigerating chamber 12 and/or the freezing chamber 11, which can be used to place items to withstand the weight of the items.

The present invention is disclosed in the following claims.

## Claims

1. A multifunctional vehicle-mounted refrigerator with a plug-in battery (5), comprising a refrigerator box (1), an openable cover (2) arranged on a top of the refrigerator box (1), a refrigerating chamber (12) and a freezing chamber (11) that are arranged side by side in the refrigerator box (1), and a compressor (20) that is installed at a bottom of one side of the refrigerator box (1);
wherein the vehicle-mounted refrigerator further comprises two rollers (7) arranged at one end of the bottom of the refrigerator box (1) and a telescopic pull rod (3) arranged at another end of the refrigerator box (1);
wherein a battery chamber (10) is defined in a side wall of the refrigerator box (1), and a battery (5) is inserted into the battery chamber (10),
**characterized in that** the battery (5) comprises a battery box (51) and a battery cover (52) arranged at an upper end of the battery box (51), wherein laterally movable buckle plates (53) are symmetrically arranged between two ends of the battery cover (52), wherein two ends of the buckle plates (53) extend out of respective ends of the battery cover (52), a central portion of the buckle plates (53) is disposed outside the battery cover (52), and the buckle plates (53) at both ends are connected by an elastic piece (57), which is disposed in a limiting groove (59) defined in an inner side of the battery cover (52), wherein a conductive socket (9) is arranged in the battery chamber (10), and a conductive plug disposed on a side of the battery box (51) is plugged into the conductive socket (9), wherein at least one groove (22) is defined in an inner side wall of the box cover (2), and a detachable fruit cutting board (27) is embedded in the at least one groove (22), wherein a rotating blocking plate (23) is installed at one end of the at least one groove (22), and a convex plate (26) is installed on a side wall at another end, wherein both ends of the fruit cutting board (27) are restricted in the groove (22) by the rotating blocking plate (23) and the convex plate (26), and an inner bottom surface of the groove (22) is evenly distributed with raised blocks (25).

2. The multifunctional vehicle-mounted refrigerator of claim 1, wherein a connecting groove (58) is defined in an inner side of the buckle plates (53) at a position corresponding to the elastic piece (57), and an elastic piece connecting portion (510) is arranged at an end of the connecting groove (58).

3. The multifunctional vehicle-mounted refrigerator of claim 2, wherein the elastic piece (57) is a spring, and the elastic piece connecting portion (510) comprises an insert plate, and a spring insert pin that is arranged at an end of the insert plate and that is operative to be mated with the insert plate through the spring, and wherein the spring insert pin is operative to axially extend into an inside of the spring to fix an end of the spring, ensuring that an elastic force is evenly applied when the spring is compressed.

4. The multifunctional vehicle-mounted refrigerator of claim 1, wherein a switch button (54) is installed on the battery cover (52), and a power indicator (55) and a status indicator (56) are arranged on one side of the switch button (54), wherein the switch button (54), the power indicator (55) and the status indicator (56) are all coupled to a control circuit board disposed on an inner side of the battery cover (52).

5. The multifunctional vehicle-mounted refrigerator of claim 1, wherein a pair of pull rod mounts (18) are installed at each of both sides of the refrigerator box (1), and a pull rod fixing tube (17) is connected between the pull rod mounts (18) disposed on each side, wherein an axially movable pull rod inner tube (36) is installed inside the pull rod fixing tube (17), one end of the two pull rod inner tubes (36) is connected by a pull rod (3), a movable shaft plug (38) is axially inserted into and arranged at one end of each of the pull rod inner tubes (36) that is connected with the pull rod (3), an outer end of the movable shaft plug (38) is provided with an unlocking knob (19) that is installed on a side wall of the pull rod (3), wherein when the unlocking knob (19) is rotated, the movable shaft plug (38) is pushed to move axially, wherein a fixing shaft plug (39) is installed at another end of the pull rod inner tube (36), a lock tongue (313) is radially movably arranged inside the fixing shaft plug (39), wherein one end of the lock tongue (313) is equipped with a spring (312), and another end is inserted into a lock hole defined in a side wall of the pull rod fixing tube (17), wherein an unlocking push rod (311) is arranged axially movable in the fixing shaft plug (39), wherein one end of the unlocking push rod (311) is provided with a slope and is operative to be inserted into a middle of the lock tongue (313) configured to push the lock tongue (313) to move radially, and another end of the unlocking push rod (311) is connected with the movable shaft plug (38) through a connecting shaft (37).

6. The multifunctional vehicle-mounted refrigerator of claim 5, wherein a notch is defined in a side wall of the pull rod (3), and the unlocking knob (19) is installed in the notch and is connected to the side wall at one end of the notch through a rotating shaft.

7. The multifunctional vehicle-mounted refrigerator of claim 5, wherein the unlocking push rod (311) is defined with an elongated limiting hole (310), and a protrusion disposed inside the fixing shaft plug (39) is embedded in the elongated limiting hole (310).

8. The multifunctional vehicle-mounted refrigerator of claim 1, wherein the raised blocks (25) are in the shape of a square truncated cone, and have a pointed top and is in point contact with the fruit cutting board (27) so as to keep a surface of the fruit cutting board (27) dry and reduce the growth of bacteria.

9. The multifunctional vehicle-mounted refrigerator of claim 1, wherein one end of the groove (22) is defined with a receding inner slot, and one end of the rotating blocking plate (23) is connected with a rotating shaft arranged in a middle of the receding inner slot.

10. The multifunctional vehicle-mounted refrigerator of claim 1, wherein a corner protection board (16) is installed at the bottom of one end of the refrigerator box (1) that is not equipped with rollers (7), and a corner protection boss (35) is arranged transversely on the inner side of the corner protection board (16), and slopes are arranged on both sides of the corner protection boss (35).

11. The multifunctional vehicle-mounted refrigerator of claim 1, wherein a rotating shaft (28) is symmetrically arranged between two ends at one side of the cover (2), wherein in a center of the side of the cover (2) facing away from the rotating shaft (28) is installed a flip buckle cover (8), which is operative to be interlocked with an upper edge of the refrigerator box (1), wherein two ends of an inner side wall at the top of the refrigerator box (1) are defined with vertical slots (14), and a circular slot (15) is provided at the bottom of each of the vertical slots (14), and wherein the rotating shaft (28) is inserted and embedded into the circular slot (15) along the vertical slot (14) at either end.

12. The multifunctional vehicle-mounted refrigerator of claim 1, wherein at least two types of power sockets (6) are installed at the side of the refrigerator box (1) below the battery chamber (10).

13. The multifunctional vehicle-mounted refrigerator of claim 1, wherein a storage basket (13) is installed inside the refrigerating chamber (12) and/or the freezing chamber (11).

## Patentansprüche

1. Multifunktionaler, fahrzeugmontierter Kühlschrank mit einer einsteckbaren Batterie (5), der einen Kühlschrankkasten (1), eine zu öffnende Abdeckung (2), die auf einer Oberseite des Kühlschrankkastens (1) angeordnet ist, eine Kühlkammer (12) und eine Gefrierkammer (11), die nebeneinander in dem Kühlschrankkasten (1) angeordnet sind, und einen Kompressor (20) aufweist, der an einem Boden einer Seite des Kühlschrankkastens (1) installiert ist;
wobei der fahrzeugmontierte Kühlschrank weiterhin zwei Rollen (7), die an einem Ende des Bodens des Kühlschrankkastens (1) angeordnet sind, und eine teleskopische Zugstange (3) aufweist, die an einem anderen Ende des Kühlschrankkastens (1) angeordnet ist;
wobei eine Batteriekammer (10) in einer Seitenwand des Kühlschrankkastens (1) ausgebildet ist, und eine Batterie (5) in die Batteriekammer (10) eingesetzt ist,
**dadurch gekennzeichnet, dass** die Batterie (5) einen Batteriekasten (51) und eine Batterieabdeckung (52) aufweist, die an einem oberen Ende des Batteriekastens (51) angeordnet ist, wobei seitlich bewegliche Schnallenplatten (53) symmetrisch zwischen zwei Enden der Batterieabdeckung (52) angeordnet sind, wobei sich zwei Enden der Schnallenplatten (53) aus den jeweiligen Enden der Batterieabdeckung (52) heraus erstrecken, ein mittlerer Abschnitt der Schnallenplatten (53) außerhalb der Batterieabdeckung (52) angeordnet ist und die Schnallenplatten (53) an beiden Enden durch ein elastisches Stück (57) verbunden sind, das in einer Begrenzungsnut (59) angeordnet ist, die in einer Innenseite der Batterieabdeckung (52) ausgebildet ist, wobei in der Batteriekammer (10) eine leitende Buchse (9) angeordnet ist und ein an einer Seite des Batteriekastens (51) angeordneter leitender Stecker in die leitende Buchse (9) eingesteckt ist, wobei in einer inneren Seitenwand der Kastenabdeckung (2) mindestens eine Nut (22) ausgebildet ist und in der mindestens einen Nut (22) ein abnehmbares Obstschneidebrett (27) eingebettet ist, wobei eine drehbare Blockierplatte (23) an einem Ende der mindestens einen Nut (22) installiert ist und eine konvexe Platte (26) an einer Seitenwand an einem anderen Ende installiert ist, wobei beide Enden des Obstschneidebretts (27) in der Nut (22) durch die drehende Blockierplatte (23) und die konvexe Platte (26) eingeschränkt sind und eine innere Bodenfläche der Nut (22) gleichmäßig mit erhöhten Blöcken (25) verteilt ist.

2. Multifunktionaler, fahrzeugmontierter Kühlschrank nach Anspruch 1, wobei eine Verbindungsnut (58) in einer Innenseite der Schnallenplatten (53) an einer Position definiert ist, die dem elastischen Stück (57) entspricht, und ein Verbindungsabschnitt (510) des elastischen Stücks an einem Ende der Verbindungsnut (58) angeordnet ist.

3. Multifunktionaler, fahrzeugmontierter Kühlschrank nach Anspruch 2, wobei das elastische Stück (57) eine Feder ist und der Verbindungsabschnitt (510) des elastischen Stücks eine Einsatzplatte und einen Federeinsatzstift aufweist, der an einem Ende der Einsatzplatte angeordnet ist und der so betrieben wird, dass er mit der Einsatzplatte durch die Feder zusammenpasst, und wobei der Federeinsatzstift so betrieben wird, dass er sich axial in das Innere der Feder erstreckt, um ein Ende der Feder zu fixieren, wodurch sichergestellt wird, dass eine elastische Kraft gleichmäßig aufgebracht wird, wenn die Feder zusammengedrückt wird.

4. Multifunktionaler, fahrzeugmontierter Kühlschrank nach Anspruch 1, wobei ein Schaltknopf (54) an der Batterieabdeckung (52) installiert ist und eine Leistungsanzeige (55) und eine Statusanzeige (56) auf einer Seite des Schaltknopfes (54) angeordnet sind, wobei der Schaltknopf (54), die Leistungsanzeige (55) und die Statusanzeige (56) alle mit einer Steuerleiterplatte verbunden sind, die an einer Innenseite der Batterieabdeckung (52) angeordnet ist.

5. Multifunktionaler, fahrzeugmontierter Kühlschrank nach Anspruch 1, wobei an beiden Seiten des Kühlschrankkastens (1) jeweils ein Paar Zugstangenhalterungen (18) angebracht sind und ein Zugstangenbefestigungsrohr (17) zwischen den auf jeder Seite angeordneten Zugstangenhalterungen (18) angeschlossen ist, wobei ein axial bewegliches Zugstangeninnenrohr (36) innerhalb des Zugstangenbefestigungsrohrs (17) installiert ist, ein Ende der beiden Zugstangeninnenrohre (36) durch eine Zugstange (3) verbunden ist, ein beweglicher Wellenstopfen (38) axial in ein Ende von jedem der Zugstangeninnenrohre (36), das mit der Zugstange (3) verbunden ist, eingeführt und an diesem angeordnet ist, ein äußeres Ende des beweglichen Wellenstopfens (38) mit einem Entriegelungsknopf (19) versehen ist, der an einer Seitenwand der Zugstange (3) installiert ist, wobei, wenn der Entriegelungsknopf (19) gedreht wird, der bewegliche Wellenstopfen (38) gedrückt wird, um sich axial zu bewegen, wobei ein Befestigungswellenstopfen (39) an einem anderen Ende des Zugstangeninnenrohrs (36) installiert ist, eine Verriegelungszunge (313) radial beweglich innerhalb des Befestigungswellenstopfens (39) angeordnet ist, wobei ein Ende der Verriegelungszunge (313) mit einer Feder (312) ausgestattet ist und ein anderes Ende in ein Verriegelungsloch eingeführt ist, das in einer Seitenwand des Zugstangenbefestigungsrohrs (17) ausgebildet ist, wobei eine Entriegelungsschubstange (311) axial beweglich in dem Befestigungswellenstopfen (39) angeordnet ist, wobei ein Ende der Entriegelungsschubstange (311) mit einer Neigung versehen ist und dazu eingerichtet ist, in eine Mitte der Verriegelungszunge (313) eingeführt zu werden, um die Verriegelungszunge (313) zu schieben, damit sie sich radial bewegt, und ein anderes Ende der Entriegelungsschubstange (311) mit dem beweglichen Wellenstopfen (38) durch eine Verbindungswelle (37) verbunden ist.

6. Multifunktionaler, fahrzeugmontierter Kühlschrank nach Anspruch 5, wobei eine Kerbe in einer Seitenwand der Zugstange (3) ausgebildet ist und der Entriegelungsknopf (19) in der Kerbe installiert ist und mit der Seitenwand an einem Ende der Kerbe durch eine Drehwelle verbunden ist.

7. Multifunktionaler, fahrzeugmontierter Kühlschrank nach Anspruch 5, wobei die Entriegelungsschubstange (311) mit einem länglichen Begrenzungsloch (310) versehen ist und ein im Inneren des Befestigungswellenstopfens (39) angeordneter Vorsprung in das längliche Begrenzungsloch (310) eingebettet ist.

8. Multifunktionaler, fahrzeugmontierter Kühlschrank nach Anspruch 1, wobei die erhöhten Blöcke (25) die Form eines quadratischen Kegelstumpfes haben und eine spitze Spitze aufweisen und in Punktkontakt mit dem Obstschneidebrett (27) stehen, um eine Oberfläche des Obstschneidebretts (27) trocken zu halten und das Wachstum von Bakterien zu verringern.

9. Multifunktionaler, fahrzeugmontierter Kühlschrank nach Anspruch 1, wobei ein Ende der Nut (22) mit einem zurücktretenden inneren Schlitz ausgebildet ist und ein Ende der drehenden Blockierplatte (23) mit einer Drehwelle verbunden ist, die in der Mitte des zurücktretenden inneren Schlitzes angeordnet ist.

10. Multifunktionaler, fahrzeugmontierter Kühlschrank nach Anspruch 1, wobei ein Eckschutzbrett (16) an dem Boden eines Endes des Kühlschrankkastens (1) angebracht ist, das nicht mit Rollen (7) ausgestattet ist, und ein Eckschutzvorsprung (35) quer auf der Innenseite des Eckschutzbretts (16) angeordnet ist, und Schrägen auf beiden Seiten des Eckschutzvorsprungs (35) angeordnet sind.

11. Multifunktionaler, fahrzeugmontierter Kühlschrank nach Anspruch 1, wobei eine Drehwelle (28) symmetrisch zwischen zwei Enden an einer Seite der Abdeckung (2) angeordnet ist, wobei in der Mitte der von der Drehwelle (28) abgewandten Seite der Abdeckung (2) eine Klappschnallenabdeckung (8) angebracht ist, die so betrieben wird, dass sie mit einer Oberkante des Kühlschrankkastens (1) verriegelt werden kann, wobei zwei Enden einer inneren Seitenwand an der Oberseite des Kühlschrankkastens (1) mit vertikalen Schlitzen (14) ausgebildet sind, und ein kreisförmiger Schlitz (15) an dem Boden jedes der vertikalen Schlitze (14) vorgesehen ist, und wobei die Drehwelle (28) in den kreisförmigen Schlitz (15) entlang des vertikalen Schlitzes (14) an beiden Enden eingesetzt und eingebettet ist.

12. Multifunktionaler, fahrzeugmontierter Kühlschrank nach Anspruch 1, wobei mindestens zwei Arten von Steckdosen (6) an der Seite des Kühlschrankkastens (1) unterhalb der Batteriekammer (10) installiert sind.

13. Multifunktionaler, fahrzeugmontierter Kühlschrank nach Anspruch 1, wobei in der Kühlkammer (12) und/oder der Gefrierkammer (11) ein Aufbewahrungskorb (13) installiert ist.

## Revendications

1. Réfrigérateur multifonction monté sur un véhicule avec batterie (5) enfichable, comprenant un corps de réfrigérateur (1), un couvercle (2) ouvrable agencé sur un dessus du corps de réfrigérateur (1), une chambre réfrigérante (12) et une chambre de congélation (11) qui sont agencées côte à côte dans le corps de réfrigérateur (1) et un compresseur (20) qui est installé au niveau d'un bas d'un côté du corps de réfrigérateur (1) ;
dans lequel le réfrigérateur monté sur un véhicule comprend en outre deux roulettes (7) agencées au niveau d'une extrémité du bas du corps de réfrigérateur (1) et une tige de traction (3) télescopique agencée au niveau d'une autre extrémité du corps de réfrigérateur (1) ;
dans lequel une chambre de batterie (10) est définie dans une paroi latérale du corps de réfrigérateur (1), et une batterie (5) est insérée dans la chambre de batterie (10),
**caractérisé en ce que** la batterie (5) comprend un corps de batterie (51) et un couvercle de batterie (52) agencé au niveau d'une extrémité supérieure du corps de batterie (51), dans lequel des plaques de fermoir (53) mobiles latéralement sont agencées de manière symétrique entre deux extrémités du couvercle de batterie (52), dans lequel deux extrémités des plaques de fermoir (53) s'étendent hors des extrémités respectives du couvercle de batterie (52), une partie centrale des plaques de fermoir (53) est disposée à l'extérieur du couvercle de batterie (52), et les plaques de fermoir (53) au niveau des deux extrémités sont reliées par une pièce élastique (57), qui est disposée dans un renfoncement de limitation (59) défini dans un côté interne du couvercle de batterie (52), dans lequel une prise conductrice (9) est agencée dans la chambre de batterie (10), et une fiche conductrice disposée sur un côté du corps de batterie (51) est branchée dans la prise conductrice (9), dans lequel au moins un renfoncement (22) est défini dans une paroi latérale interne du couvercle (2) de corps, et une planche à découper les fruits (27) détachable est intégrée dans l'au moins un renfoncement (22), dans lequel une plaque de blocage rotative (23) est installée au niveau d'une extrémité de l'au moins un renfoncement (22), et une plaque convexe (26) est installée sur une paroi latérale d'une autre extrémité, dans lequel les deux extrémités de la planche à découper les fruits (27) sont restreintes dans le renfoncement (22) par la plaque de blocage rotative (23) et la plaque convexe (26) et une surface inférieure interne du renfoncement (22) est répartie uniformément avec des blocs surélevés (25).

2. Réfrigérateur multifonction monté sur un véhicule selon la revendication 1, dans lequel un renfoncement de liaison (58) est défini dans un côté interne des plaques de fermoir (53) au niveau d'une position correspondant à la pièce élastique (57), et une partie de liaison de pièce élastique (510) est agencée au niveau d'une extrémité du renfoncement de liaison (58).

3. Réfrigérateur multifonction monté sur un véhicule selon la revendication 2, dans lequel la pièce élastique (57) est un ressort, et la partie de liaison de pièce élastique (510) comprend une plaque d'insertion, et une goupille d'insertion de ressort qui est agencée au niveau d'une extrémité de la plaque d'insertion et qui est conçue pour être couplée avec la plaque d'insertion à travers le ressort et dans lequel la goupille d'insertion de ressort est conçue pour s'étendre axialement dans un intérieur du ressort pour fixer une extrémité du ressort, en assurant qu'une force élastique est appliquée uniformément lorsque le ressort est comprimé.

4. Réfrigérateur multifonction monté sur un véhicule selon la revendication 1, dans lequel un bouton de commutation (54) est installé sur le couvercle de batterie (52), et un indicateur d'alimentation (55) et un indicateur de statut (56) sont agencés sur un côté du bouton de commutation (54), dans lequel le bouton de commutation (54), l'indicateur d'alimentation (55) et l'indicateur de statut (56) sont tous couplés à une carte de circuit de commande disposée sur un côté interne du couvercle de batterie (52).

5. Réfrigérateur multifonction monté sur un véhicule selon la revendication 1, dans lequel une paire de supports de tige de traction (18) sont installés au niveau de chacun des deux côtés du corps de réfrigérateur (1), et un tube de fixation de tige de traction (17) est relié entre les supports de tige de traction (18) disposés de chaque côté, dans lequel un tube interne de tige de traction (36) mobile axialement est installé à l'intérieur du tube de fixation de tige de traction (17), une extrémité des deux tubes internes de tige de traction (36) est reliée par une tige de traction (3), un raccord d'arbre mobile (38) est inséré axialement dans une extrémité de chacun des tubes internes de tige de traction (36) et agencé au niveau de celle-ci, qui est reliée à la tige de traction (3), une extrémité externe du raccord d'arbre mobile (38) est prévue avec un bouton de déverrouillage (19) qui est installé sur une paroi latérale de la tige de traction (3), dans lequel lorsque le bouton de déverrouillage (19) est tourné, le raccord d'arbre mobile (38) est poussé pour se déplacer axialement, dans lequel un raccord d'arbre de fixation (39) est installé au niveau d'une autre extrémité du tube interne de tige de traction (36), une languette de verrouillage (313) est agencée de manière radialement mobile à l'intérieur du raccord d'arbre de fixation (39), dans lequel une extrémité de la languette de verrouillage (313) est équipée d'un ressort (312), et une autre extrémité est insérée dans un trou de verrouillage défini dans une paroi latérale du tube de fixation de tige de traction (17), dans lequel une tige de poussée de déverrouillage (311) est agencée de manière axialement mobile dans le raccord d'arbre de fixation (39), dans lequel une extrémité de la tige de poussée de déverrouillage (311) est prévue avec une inclinaison et est conçue pour être insérée dans un milieu de la languette de verrouillage (313) configurée pour pousser la languette de verrouillage (313) à se déplacer radialement, et une autre extrémité de la tige de poussée de déverrouillage (311) est reliée au raccord d'arbre mobile (38) à travers un arbre de liaison (37).

6. Réfrigérateur multifonction monté sur un véhicule selon la revendication 5, dans lequel une encoche est définie dans une paroi latérale de la tige de traction (3), et le bouton de déverrouillage (19) est installé dans l'encoche et est relié à la paroi latérale au niveau d'une extrémité de l'encoche à travers un arbre rotatif.

7. Réfrigérateur multifonction monté sur un véhicule selon la revendication 5, dans lequel la tige de poussée de déverrouillage (311) est définie avec un trou de limitation allongé (310), et une saillie disposée à l'intérieur du raccord d'arbre de fixation (39) est intégrée dans le trou de limitation allongé (310).

8. Réfrigérateur multifonction monté sur un véhicule selon la revendication 1, dans lequel les blocs surélevés (25) présentent la forme d'un cône tronqué carré, et disposent d'un sommet pointu et sont en contact direct avec la planche à découper les fruits (27) de manière à garder une surface de la planche à découper les fruits (27) sèche et à réduire le développement des bactéries.

9. Réfrigérateur multifonction monté sur un véhicule selon la revendication 1, dans lequel une extrémité du renfoncement (22) est définie avec une fente interne en retrait, et une extrémité de la plaque de blocage rotative (23) est reliée à un arbre rotatif agencé dans un milieu de la fente interne en retrait.

10. Réfrigérateur multifonction monté sur un véhicule selon la revendication 1, dans lequel une planche de protection de coin (16) est installée au niveau du bas d'une extrémité du corps de réfrigérateur (1) qui n'est pas équipé de roulettes (7) et une protubérance de protection de coin (35) est agencée transversalement sur le côté interne de la planche de protection de coin (16) et des inclinaisons sont agencées des deux côtés de la protubérance de protection de coin (35).

11. Réfrigérateur multifonction monté sur un véhicule selon la revendication 1, dans lequel un arbre rotatif (28) est agencé de manière symétrique entre deux extrémités au niveau d'un côté du couvercle (2), dans lequel à un centre du côté du couvercle (2) à l'opposé de l'arbre rotatif (28) est installé un couvercle de fermoir rabattable (8) qui est conçu pour être verrouillé avec un bord supérieur du corps de réfrigérateur (1), dans lequel deux extrémités d'une paroi latérale interne au niveau du dessus du corps de réfrigérateur (1) sont définies avec des fentes verticales (14), et une fente circulaire (15) est prévue au niveau du bas de chaque fente verticale (14) et dans lequel l'arbre rotatif (28) est inséré et intégré dans la fente circulaire (15) le long de la fente verticale (14) à chaque extrémité.

12. Réfrigérateur multifonction monté sur un véhicule selon la revendication 1, dans lequel au moins deux types de prises d'alimentation (6) sont installés au niveau du côté du corps de réfrigérateur (1) sous la chambre de batterie (10).

13. Réfrigérateur multifonction monté sur un véhicule selon la revendication 1, dans lequel un panier de stockage (13) est installé à l'intérieur de la chambre réfrigérante (12) et/ou de la chambre de congélation (11).
